# EUROPÄISCHE PATENTANMELDUNG

(11) **EP 1 800 926 A2**
(43) Veröffentlichungstag der Anmeldung: **27.06.2007**
(21) Anmeldenummer: 06025759.9
(22) Anmeldetag: 13.12.2006
(51) Int. Cl.: B60J 7/057

(54) **Lastabhängige Betätigungsanordnung**

(30) Priorität: 22.12.2005 DE 102005062235
(71) Anmelder: Rausch und Pausch GmbH, 95100 Selb (DE)
(72) Erfinder: Pausch, Roman, Dr., 95100 Selb (DE); Wagner, Tobias, 21149 Hamburg (DE)
(74) Vertreter: Donath, Dirk

(57) **Zusammenfassung**

Die Erfindung betrifft eine Betätigungsanordnung für ein Cabriodach. Die Aufgabe der Erfindung, eine lastabhängige Betätigungsanordnung anzugeben, die die Nachteile des Standes der Technik vermeidet, wird dadurch gelöst, dass ein Regelkreis aus mindestens einem Positionsmesssystem (13), einer Steuereinheit (8) und mindestens einem Messsystem eines Elektromotors (9) oder mindestens einem Drucksensor (7) eines Druckkreises (3) aufgebaut ist, wobei die Signale des Messsytems des Elektromotors (9) oder des Drucksensors (7) zur Steuereinheit (8) leitbar sind und die Bewegung des Cabriodaches durch die Steuereinheit (8) regelbar ist.

## Beschreibung

Die Erfindung betrifft eine lastabhängige hydraulische Betätigungsanordnung, insbesondere für ein Cabriodach, gemäß der Gattung der Patentansprüche.

Heutige Cabriodächer sind mit Antriebsanlagen ausgestattet, die eine vollautomatische Betätigung ermöglichen. Hierzu werden Motoren für die verschiedenen Einzelbewegungen des Daches in der Kinematik angeordnet und über eine elektronische Schaltung gesteuert.
Der Nachteil dieser Lösung ist, dass die Belastung der Motoren während der Bewegung nicht erfasst wird und keine Regelung der Motorleistung erfolgen kann.
Zur genauen Steuerung des Bewegungsablaufes werden die Positionen der einzelnen Bauteile über Endschalter abgefragt und so ein rein sequentieller Ablauf der Bewegungen erzeugt.

Durch äußere Einflüsse, wie Wind von vom oder hinten, Fahrtwind oder Schrägstellung eines zugehörigen Fahrzeugs kann sich die Bewegungsgeschwindigkeit des Cabriodaches im Betriebszustand ändern, was zu unerwünscht hoher Annäherungsgeschwindigkeit von Dachteilen z. B. an die Verschlüsse führt, bzw. es muss die Dachbetätigung bei zu hoher Fahrtgeschwindigkeit unterbunden werden. Bei Kollisionen mit Gegenständen, die in der Bewegungsbahn des Daches liegen, wird der entstehende Anstieg der Motorleistung nicht erkannt, d. h. es kommt zur Beschädigung des Systems.

Die Schrift AT 402 280 B offenbart eine hydraulische Betätigungsanordnung für ein Fahrzeugverdeck mit einer Anzahl von über separate Schaltelemente mit einem gemeinsamen Druckkreis verbundenen Arbeitszylindern, einer mit den Schaltelementen verbundenen Steuereinheit und zumindest einer ebenfalls mit der Steuereinheit in Verbindung stehenden Rückmeldeeinheit zur Endstellenkontrolle der Arbeitszylinder, wobei die Rückmeldeeinheit zumindest einen im Druckkreis eingeschalteten Drucksensor aufweist, dessen Ausgangssignal über der Zeit zusammen mit den festgelegten Schaltfolgen der einzelnen Schaltelemente zur Endstellungskontrolle der einzelnen Arbeitszylinder dient.

Aus der Schrift US 5 225 747 ist eine Anordnung mit einem Messmittel in Form eines Drehpotentiometers bekannt, dessen Einsatz die Bewegungen nicht ausschließlich sequenziell, sondern über einen bestimmten Weg zusammenhängend realisieren kann.

Der Nachteil dieser beiden Systeme ist, dass die Belastung der Motoren während der Bewegung nicht erfasst werden kann und somit keine Regelung der Motorleistung möglich ist.

Aufgabe der Erfindung ist es somit, eine lastabhängige Betätigungsanordnung für ein Cabriodach anzugeben, die die zuvor stehenden Nachteile des Standes der Technik vermeidet.
Diese Aufgabe wird durch eine Betätigungsanordnung gemäß Anspruch 1 gelöst. Vorteilhafte Ausgestaltungen werden in den nachgeordneten Ansprüchen angegeben.

Das Wesen der Erfindung besteht darin, dass die lastabhängige Betätigungsanordnung eines Cabriodaches einen Regelkreis besitzt, der abhängig von der Belastung des Antriebes die Motorleistung anpasst, so dass unabhängig von äußeren Umständen immer die gleiche Verfahrensgeschwindigkeit des Cabriodaches erreicht wird und gleichzeitig ein Erfassen plötzlicher Leistungsanstiege, bspw. in einem Kollisionsfall, zur Unterbrechung oder Reversierung der Bewegung des Cabriodaches möglich ist.

Diese Regelung kann zum einen darin bestehen, dass die Steuereinheit eines mit Elektromotoren betriebenen Cabriodaches die Stromaufnahme und die Laufgeschwindigkeit der Motoren erfasst und die Leistung der Motoren solange korrigiert, bis die vorgegebenen Geschwindigkeit bei der Dachbewegung eingehalten wird. Dies kann über den Bewegungsablauf variabel erfolgen, indem die jeweilige Bewegung der Aktuatoren, die mit dem Cabriodach bzw. dem Cabriodachdeckel verbunden sind, vermittels Positionsmesssystem erfasst werden.

Die erfindungsgemäße Betätigungsanordnung weist hierzu zumindest einen Elektromotor mit Messsytem auf, das während des Bewegungsablaufes die Stromaufnahme und / oder die Drehzahl des Motors an die Steuereinheit meldet, welche diesen Ist-Wert mit einer Sollkurve vergleicht, die von der durch ein Positionsmesssystem erfassten und an die Steuereinheit gemeldeten Dachposition abhängt. Bei Abweichungen der Ist-Werte von den Soll-Werten wird die Stromaufnahme und / oder die Drehzahl des Motors angepasst.

Alternativ dazu kann die Regelung darin bestehen, dass die Hydraulik eines vollautomatischen Cabriodaches einen Drucksensor aufweist, der während des Bewegungsablaufes den Arbeitsdruck des Systems an die Steuereinheit meldet, welche diesen Ist-Wert mit einer Sollkurve abhängig von der Dachposition, die vermittels zumindest eines Positionsmesssystems, das seine Signale ebenfalls an die Steuereinheit meldet, vergleicht. Bei Abweichungen der Ist-Werte von den Soll-Werten wird die Leistung der Druckpumpe angepasst oder der Durchfluss des Arbeitsmediums in die Aktuatoren (Arbeitszylinder mit Kolbenstange) durch Schaltelemente, bspw. Proportionalventile geregelt. Die erfindungsgemäße hydraulische Betätigungsanordnung weist hierzu im Druckkreis zumindest einen Drucksensor und an den Aktuatoren zumindest ein Positionsmesssystem auf. Dabei umfasst der Druckkreis eine Anzahl seperater Schaltelemente mit entsprechenden Aktuatoren. Drucksensor und Positionsmesssystem sind mit der Steuereinheit verbunden, die die Einstellung der Schaltelemente, bspw. Proportionalventile, im Druckkreis und/oder die Drehzahl der Druckpumpe regelt. Auf diese Weise wird ein Regelkreis gebildet, der in Abhängigkeit von der Belastung des Antriebs die Motorleistung anpasst, so dass unabhängig von äußeren Einflüssen immer die gleiche Verfahrgeschwindigkeit des Verdecks erreicht wird.

Der Vorteil dieser beiden Regelungen ist, dass ein plötzlicher Anstieg der Belastung durch die Betätigungsanordnung als Abweichung des Ist-Zustandes vom Soll-Zustand, bspw. als Kollision, erkannt und die Bewegung der Betätigungsanordnung unterbrochen oder reversiert wird.

Die Erfindung wird nachstehend an Hand der schematischen Zeichnung näher erläutert. Es zeigen:
- Fig. 1: eine schematische Darstellung einer ersten Ausführungsform der erfindungsgemäßen lastabhängigen Betätigungsanordnung und
- Fig. 2:: ein schematisches Schaltschema einer zweiten Ausführungsform der erfindungsgemäßen lastabhängigen Betätigungsanordnung.

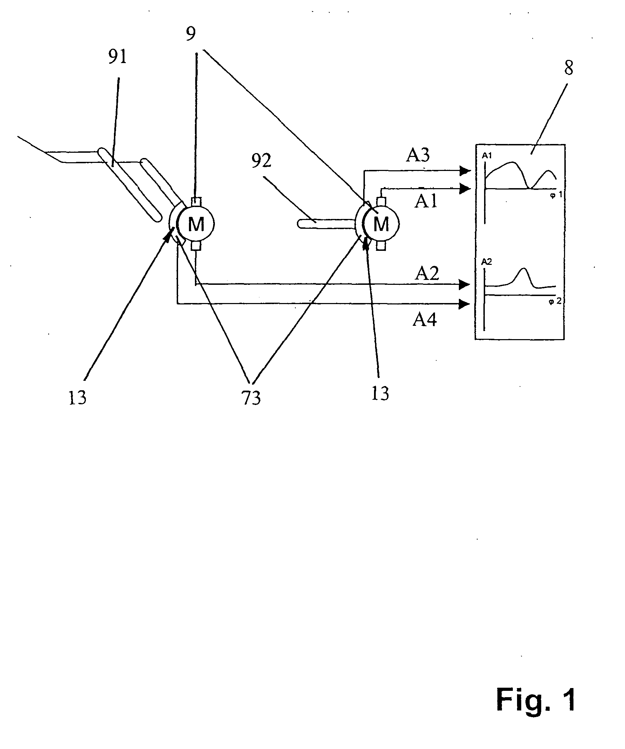

Die in Fig.1 dargestellte Betätigungsanordnung weist zwei Elektromotoren 9 mit Messsytemen (nicht in der Fig. 1 gesondert dargestellt) auf, das während des Bewegungsablaufes die Stromaufnahme und / oder die Drehzahl des Motors an eine Steuereinheit meldet, welche diesen Ist-Wert mit einer Sollkurve abhängig von der Dachposition, die vermittels zumindest eines Positionsmesssystems 13, das seine Signale ebenfalls an die Steuereinheit 8 meldet, vergleicht. Bei Abweichungen der Ist-Werte von den Soll-Werten wird die Stromaufnahme und / oder die Drehzahl der Elektromotoren 9 (die die Cabriodachkinematik 91 bzw. den Cabriodachdeckel 92 bewegen) angepasst.
Das Positionsmesssystem 13 ist dabei ein Winkelmesssystem 73.
Ein Elektromotor 9 kann bspw. einer hier nicht weiter dargestellten Bewegung eines Cabriodachs und der zweite Elektromotor 9 kann bspw. der hier ebenfalls nicht weiter dargestellten Bewegung eines Cabriodachdeckels dienen.
Über Ausgänge A1 und A2 ist das Messsytem (Stromaufnahme und / oder Drehzahlmessung) des Elektromotors 9 mit einer externen Steuereinheit 8 verbunden.
Ausgänge A3 und A4 leiten die beiden Signale der Positionsmesssysteme 13 ebenfalls an die Steuereinheit 8.

Zur Überwachung und Auswertung der jeweiligen Stromaufnahme und / oder Drehzahl und der jeweiligen Position des Cabriodachs ist in der Steuereinheit 8 ein Rechner vorgesehen (nicht in der Fig. 1 dargestellt), der den Elektromotor 9 steuert. Das Signal des Messsytems des Elektromotors 9 über der Zeit dient im Abgleich mit den Signalen des Positionsmesssytems 13 zur Kontrolle der jeweiligen Position und Last des Cabriodachs.
Dieser Abgleich der Ist-Werte erfolgt vermittels der oben genannten, im Rechner gespeicherten Soll-Kurve. Bei Abweichungen der Ist-Werte von der Soll-Kurve wird die Leistung des Elektromotors 9 angepasst / geregelt.

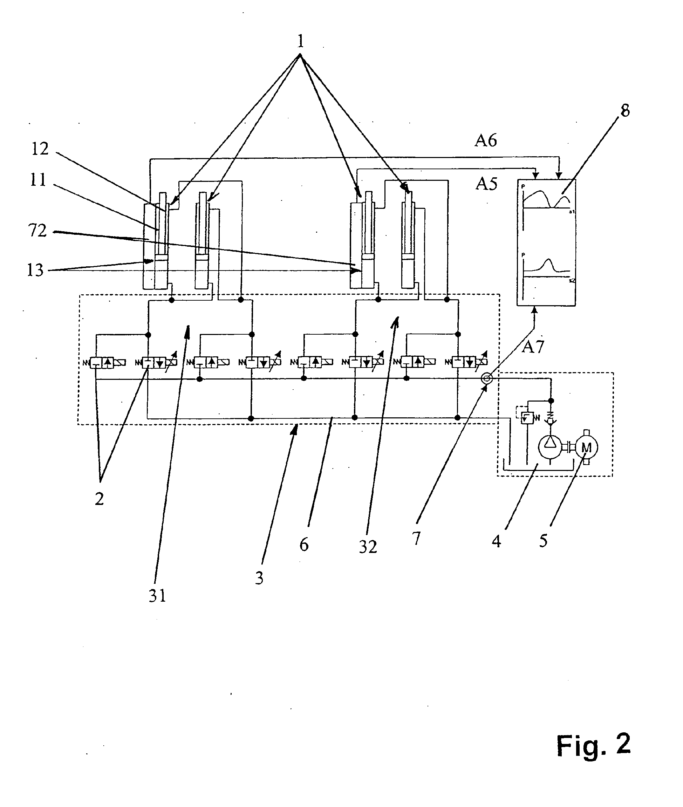

Die in Fig. 2 dargestellte Betätigungsanordnung weist vier Aktuatoren 1, jeweils bestehend aus einem Arbeitszylinder 11 und einer Kolbenstange 12 auf, wobei die an die Kolbenstange 12 anschließenden Baugruppen nicht dargestellt sind. Zwei dieser Aktuatoren 1 können bspw. einer hier nicht weiter dargestellten Bewegung eines Cabriodachs und die zwei weiteren Aktuatoren 1 können bspw. der hier ebenfalls nicht weiter dargestellten Bewegung eines Cabriodachdeckels dienen.
Die Arbeitszylinder 11 sind über separate Schaltelemente 2, die bspw. Proportionalventile sein können, mit einem gemeinsamen Druckkreis 3 verbunden, welcher sich bspw. in zwei Druckunterkreise 31 (Cabriodach) und 32 (Cabriodachdeckel) unterteilen kann, wobei die Verbindung des Druckkreises 3, einschließlich der Anbindung dessen an eine in einem Hydrauliktank 5 befindlichen Druckpumpe 4 durch Hydraulikleitungen 6 erfolgt. Diese, in der Fig. 2 durch eine Strichlinie umschlossene Baugruppe wird auch als Aggregat- oder Ventilblock bezeichnet.

Die Aktuatoren 1 sind mit Positionsmesssytemen 13 ausgestattet, so dass eine Bestimmung der Position der einzelnen Arbeitszylinder 11 ermöglicht ist.

Über Ausgänge A5 und A6 ist jeweils ein in den Druckunterkreis 31 (Cabriodach) eingeschaltetes Positionsmesssytemen 13 und ein in den Druckunterkreis 32 (Cabriodachdeckel) eingeschaltetes weiteres Positionsmesssytemen 13 mit einer externen Steuereinheit 8 verbunden.

Die Ausgänge A5 und A6 leiten die beiden Signale der in den Druckunterkreis 31 bzw. in den Druckunterkreis 32 eingeschalteten Positionsmesssytemen 13 an die Steuereinheit 8.

Im Druckkreis 3 befindet sich ein Drucksensor 7, der mit der Steuereinheit 8 über einen Ausgang A7 verbunden ist. Der Ausgang A7 leitet die Signale des eingeschalteten Drucksensors 7 ebenfalls an die Steuereinheit 8.

Zur Überwachung und Auswertung des jeweiligen Druckes des Druckkreises 3 und der jeweiligen Position der Arbeitszylinder 11 ist in der Steuereinheit 8 ein Rechner vorgesehen (nicht in der Fig. 2 dargestellt), der die Schaltelemente 2 steuert. Das Signal des Drucksensors 7 über der Zeit dient im Abgleich mit den Signalen der Positionsmesssyteme 13 zur Kontrolle der einzelnen Aktuatoren 1.
Dieser Abgleich der Ist-Werte erfolgt vermittels einer Sollkurve. Bei Abweichungen der Ist-Werte von der Sollkurve wird die Leistung der Druckpumpe 4 angepasst und / oder der Durchfluss des Hydraulikmediums vermittels der Schaltelemente 2 geregelt.

Am Anfang eines Betätigungsvorgangs sind die Kolbenstangen 12 der Aktuatoren 1 eingefahren und alle Schaltelemente 2 unbestromt. Bei eingeschalteter Druckpumpe 4 werden nun die Schaltelemente 2 in eine andere, nicht dargestellte Position gebracht, wodurch die Kolbenstange 12 des Arbeitszylinders 11 ausfährt.
Über den Drucksensor 7 wird der Druck im Druckkreis 3, im Beispiel der Fig. 2 also im Druckunterkreis 31 und im Druckunterkreis 32 ermittelt und im Rechner der Steuereinheit 8 verarbeitet, wobei der aktuelle Druck mit einem vom Ablauf her bekannten Druck über den zeitlichen Verlauf verglichen wird.
Gleichzeitig wird über die Positionsmesssyteme 13 die Position der Arbeitszylinder 11 bestimmt.
Die Steuerung kann also an Hand des Druckes über die Zeit im Abgleich mit den vermittels der Positionsmesssyteme 13 ermittelten Positionsdaten der Arbeitszylinder 11 erkennen, ob die Position der Kolbenstange 12 im Arbeitszylinder 11 vermittels Leistung der Druckpumpe 4 und / oder der Regelung vermittels der Schaltelemente 2 von dem aktuellen Ist- auf den Soll-Wert korrigiert werden muss.

Der Vorteil der erfindungsgemäßen Betätigungsanordnung ist, dass ein plötzlicher Anstieg der Belastung (Abweichen des Ist- vom Soll-Wert) erkannt und die Bewegung korrigiert, unterbrochen oder reversiert wird.
Dadurch wird eine immer gleichmäßige Bewegung des Daches unter verschiedenen äußeren Bedingungen gewährleist, ein starkes Anschlagen in den jeweiligen Endlagen vermieden und die Erkennung von (groben) Kollisionen realisiert.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: - Aktuator
- 11: - Arbeitszylinder
- 12: - Kolbenstange
- 13: - Positionsmesssytem
- 2: - Schaltelemente
- 3: - Druckkreis
- 31: - Druckunterkreis (Cabriodach)
- 32: - Druckunterkreis (Cabriodachdeckel)
- 4: - Druckpumpe
- 5: - Hydrauliktank
- 6: - Leitung
- 7: - Drucksensor
- 72: - Wegmesssytem
- 73: - Winkelmesssystem
- 8: - Steuereinheit
- 9: - Elektromotor
- 91: - Cabriodachkinematik
- 92: - Cabriodachdeckel

- A1; A2; A3; A4: - Ausgänge (Elektromotor-Steuerung)
- A5; A6; A7: - Ausgänge (Hydraulik-Steuerung)

## Patentansprüche

1. Lastabhängige Betätigungsanordnung für ein Cabriodach umfassend einen Regelkreis aus mindestens einem Positionsmesssystem (13), einer Steuereinheit (8) und mindestens einem Messsystem eines Elektromotors (9) oder mindestens einem Drucksensor (7) eines Druckkreises (3), wobei die Signale des Messsytems des Elektromotors (9) oder des Drucksensors (7) zur Steuereinheit (8) leitbar sind und die Bewegung des Cabriodaches durch die Steuereinheit (8) regelbar ist.

2. Lastabhängige Betätigungsanordnung für ein Cabriodach mit mindestens einem Elektromotor (9) gemäß Anspruch 1, **dadurch gekennzeichnet, dass** das Positionsmesssystem (13) ein Winkelmesssystem (73) ist.

3. Lastabhängige Betätigungsanordnung für ein Cabriodach mit mindestens einem Drucksensor (7) gemäß Anspruch 1, **dadurch gekennzeichnet, dass** eine Anzahl von über separate Schaltelemente (2) mit dem Druckkreis (3) verbundenen Aktuatoren (1) vermittels der Schaltelemente (2), die mit der Steuereinheit (8) verbunden und durch diese regelbar sind, steuerbar ist.

4. Lastabhängige Betätigungsanordnung für ein Cabriodach gemäß Anspruch 3, **dadurch gekennzeichnet, dass** die Steuereinheit (8) zur Überwachung und Auswertung der Signale einen Rechner aufweist.
